Europäisches Patentamt

(19) European Patent Office

Office européen des brevets

(11) Publication number: **0 278 558 B1**

(12) **EUROPEAN PATENT SPECIFICATION**

(45) Date of publication of patent specification :
**14.08.91 Bulletin 91/33**

(51) Int. Cl.⁵ : **B62D 33/04**

(21) Application number : **88200169.6**

(22) Date of filing : **01.02.88**

(54) Road transport vehicle suitable for two separate loads.

(30) Priority : **02.02.87 NL 8700250**

(43) Date of publication of application :
**17.08.88 Bulletin 88/33**

(45) Publication of the grant of the patent :
**14.08.91 Bulletin 91/33**

(84) Designated Contracting States :
**AT BE DE ES FR GB GR IT LU NL**

(56) References cited :
**WO-A-80/01553
DE-A- 2 540 189
FR-A- 1 353 904
US-A- 2 316 554**

(73) Proprietor : **Uniman B.V.
Nijverheidsweg 3
NL-1751 HG Schagerbrug (NL)**

(72) Inventor : **De Koning, Bernardus
Heust 24
NL-5325 XC Ammerzoden (NL)**

(74) Representative : **Hoijtink, Reinoud et al
OCTROOIBUREAU ARNOLD & SIEDSMA
Sweelinckplein 1
NL-2517 GK Den Haag (NL)**

Jouve, 18, rue Saint-Denis, 75001 PARIS

## Description

The current invention relates to transport vehicles, in particular to road transport vehicles.

A great part of road transport vehicles provided with a loading floor is suitable for transporting a load with a great weight. Loads of great weight can be transported after optimalization of such road transport vehicles within the limitations of the art and taking into account the legal regulations.

There also exist road transport vehicles which are suitable for transporting a load with a large volume. A large degree of optimalization has also been achieved in this sector of road transport vehicles, so that such vehicles are suitable for the transporting of a load with a large volume.

Generally in the case of road transport vehicles which are suitable for transporting a load with a great weight only a small part of the volume available for the load is used. With road transport vehicles made suitable for loads with a large volume, the reverse is the case ; in such road transport vehicles, even though the effective laden weight of such vehicles is generally considerably smaller, a part of the available laden weight often remains unused. In view of the cost price of road transport, this is an undesirable situation.

WO-A-80/01553 describes a road transport vehicle, comprising a fixed loading floor and at least a movable rectangular loading floor extending at least partially over the fixed loading floor, wherein the movable loading floor is movable parallel to itself in substantial vertical direction, and wherein said movable loading floor is guided only at its corners.

It is possible as a result of this second, movable loading floor to transport two separate loads independently of each other on the road transport vehicle.

In a road transport vehicle according to said specification the load with the comparatively small volume and the comparatively great weight are for example placed first on the lower, fixed loading floor. In order to facilitate this loading the upper loading floor is moved to the uppermost position during the loading. When loading with the heavy load is completed, the upper loading floor is moved downward as far as possible. The load with a small weight and relatively large volume can then be loaded onto the upper, movable loading floor.

It is of course also possible to first charge the load with the small weight and the large volume, and for this purpose the upper movable loading floor is moved into the lowest position so that it can be loaded easily, for instance by means of fork-lift trucks. When this charging is completed, the movable loading floor is moved upward, so that the space becomes available for loading of the lower loading floor with the heavy freight of relatively small volume.

Unloading of the road transport vehicle according to said specification can likewise be performed in the desired sequence ; thus when the light load is to be unloaded first, it can be removed from the upper loading floor, following which the latter is moved upward, so that space comes available for the unloading of the heavy load arranged on the lower loading floor. Alternatively, the movable loading floor can first of all be moved upward, so that the heavy load can be unloaded from the lower loading floor, after which the upper loading floor can be moved into the lowest position and the light freight placed thereon can be unloaded.

Another disadvantage from the transport vehicle known from WO-80/01553 is the fact, that, if the movable loading floor is moved towards its upper position, the roof is lifted until above the normally restricted headroom. In covered loading base this headroom is usually not available, so that in such cases the movable loading floor can not be moved to its upper position, restricting the use of this known vehicle. These disadvantages are not present in the vehicle according to the present invention.

However, the road transport vehicle known from WO-80/01553 can only be loaded from its rear, as it is only accessible from its back side. As the movable loading floor comprises frames extending from the sides of said loading floor upwardly, the upper loading floor is only accessible from its sides.

The aim of the present invention is to provide a transport vehicle, of which the movable loading floor is also laterally accessible ; i.e. fork-lift trucks can be driven directly onto said movable loading floor, from a loading platform at the side of the vehicle.

This aim is reached in that the movable loading floor has an overall thickness, which is small relative to the overall thickness of the fixed loading floor ; that at least one of the side walls arranged on either side of the loading floors is removable in its entirety ; that the side walls do not comprise any fixed structural member between the corners ; and that removable support means have been provided for the movable loading floor, which can be secured to said movable loading floor.

Although the movable loading floor is in principle only fit to carry loads with relatively low weights, it can be dimensioned lighter than the fixed loading floor. However, during travel, especially in the case of a road vehicle, the dynamic loads exerted by the load present on the loading floor may be substantial, so that it may be necessary to provide the movable loading floor with removable support means, which carry at least a part of the load borne by the second loading floor. One has to bear in mind, that said loading floor is only supported at its corners.

By having these support means removable, accessibility from the sides is not impared.

In order to also be able to transport comparatively heavy loads on the upper loading floor the movable loading floor is provided on its sides with removable support means. These latter are of particular importance when, during travelling, the dynamic loads of the loading floor have to be transmitted. These supporting means are removable so as not to have a disadvantageous effect on the accessibility of the sides.

According to a second embodiment the loading floor can be tilted on one of its longitudinal sides. This preferred embodiment makes it possible to load and unload the lower loading floor from the top of the goods vehicle, for instance by means of a crane.

The invention will be further elucidated hereinafter with reference to an embodiment that is shown in the annexed drawings, in which :

Figure 1 shows a partly broken away perspective view of a semi-trailer equipped in accordance with the current invention ;

figure 2 shows a partly broken away perspective view of a detail of the suspending construction of the movable loading floor employed in the current invention ;

figure 3 is a schematic, perspective view of the hydraulic lifting device for use with the current invention ;

figure 4 is a partly broken away perspective view of a detail of the removable support bars according to the current invention ; and

figure 5 shows a schematic cross sectional view of a second embodiment of the current invention.

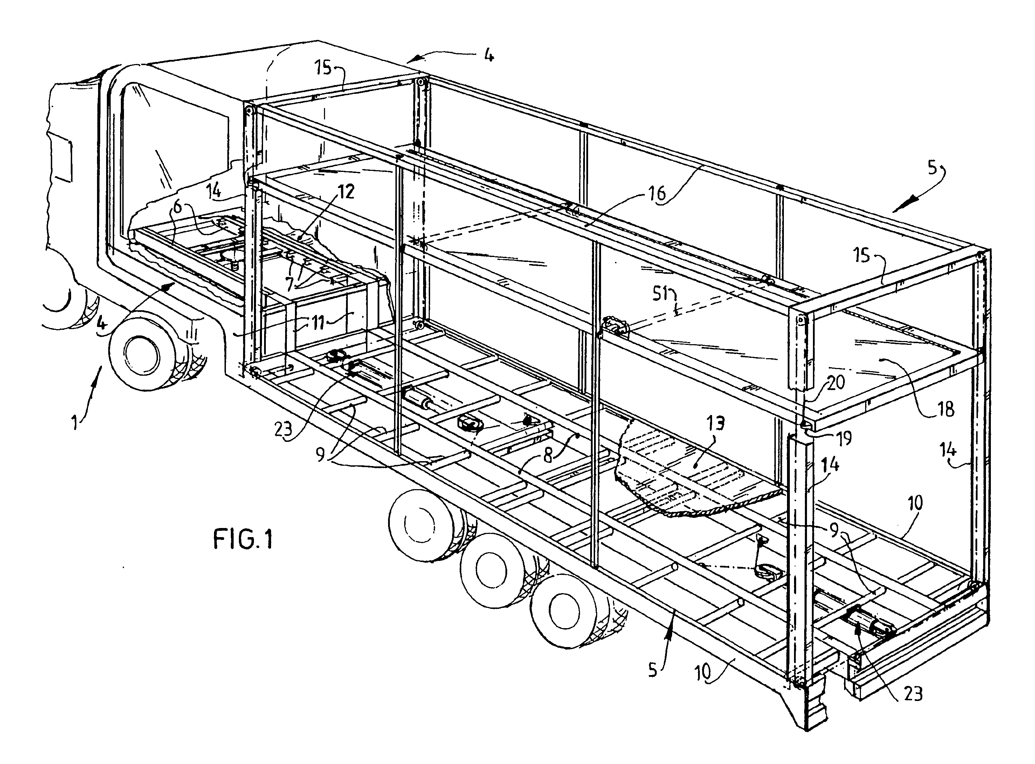

The articulated truck shown in figure 1 comprises a tractive unit 1 and a semi-trailer 2 placed thereon for rotation by means of a pin 3. The frame of semi-trailer 2 comprises a raised part 4 and a part 5 arranged at the normal loading height. The raised part 4 of the frame is constructed in classical manner by means of two main beams 6 extending in lengthwise direction and I-profiles 7 fitted between them.

While the lower portion 5 of the trailer frame likewise comprises two main beams 8 extending in longitudinal direction, these main beams 8 are joined in transverse direction by round tubes 9. These round tubes 9 extend over the whole width of the trailer as far as side beams 10 arranged on either side of the main beams. As a result of using round tubes instead of I-profiles the weight of the frame is reduced considerably, which is of importance in at least partially compensating for the weight of the movable loading floor. The low portion 5 of the frame is connected to the raised part 4 of the frame in known manner by means of short profile pices 11. Arranged on the raised part 4 of the frame is a loading floor plate 12, while a loading floor plate 13 is arranged on the low portion of the frame.

Attached beneath the low part 5 of the frame in a manner not shown in the drawing are axles having wheels attached to them. Since there do not form part of the invention, they will not be discussed further.

Fitted to the four corner points of the lower portion 5 of the frame are four upward extending posts 14 formed by U-profiles. Both the foremost pair of posts 14 and the rearmost pair of posts 14 are joined by a cross beam 15. Both the left-hand pair of posts 14 and the right-hand pair of posts 14 are connected by a longitudinal beam 16 extending in lengthwise direction. Both longitudinal beams 16 are each connected at two points to the side beam 10 of frame 5 located beneath by disconnectable support bars 17 extending in vertical direction.

The foremost part of the semi-trailer situated above the raised portion of the loading floor is otherwise constructed in conventional manner and covered in this embodiment with plates. The part of the loading floor situated above the low portion of the loading floor is covered with removable tarpaulin.

Arranged inside the space bounded by the four posts 14 is a horizontal loading floor 18 which can move parallel to itself in vertical direction. This movable loading floor 18 is provided at each of its corner points with ears 19 which extend into the grooves of the U-profiles forming posts 14. These ears 19 ensure the guiding of the movable loading floor 18. Also attached to ears 19 is a cable 20 which is guided over guide wheels 21 arranged in the top of posts 14 and over guide wheels 22 arranged in the bottom of the posts and which is connected at its other end to a hydraulic pulling device 23.

Because the weight of the movable loading floor is transmitted to the frame at only four points the frame is suitable for absorbing this four-point loading. The longitudinal side beams 10 thus take a heavier form than usual and the end cross beams 32, 33 to be discussed later and the front cross beams (not shown) connecting the foremost posts 14 likewise take a heavier form than a trailer frame associated with the state of the art.

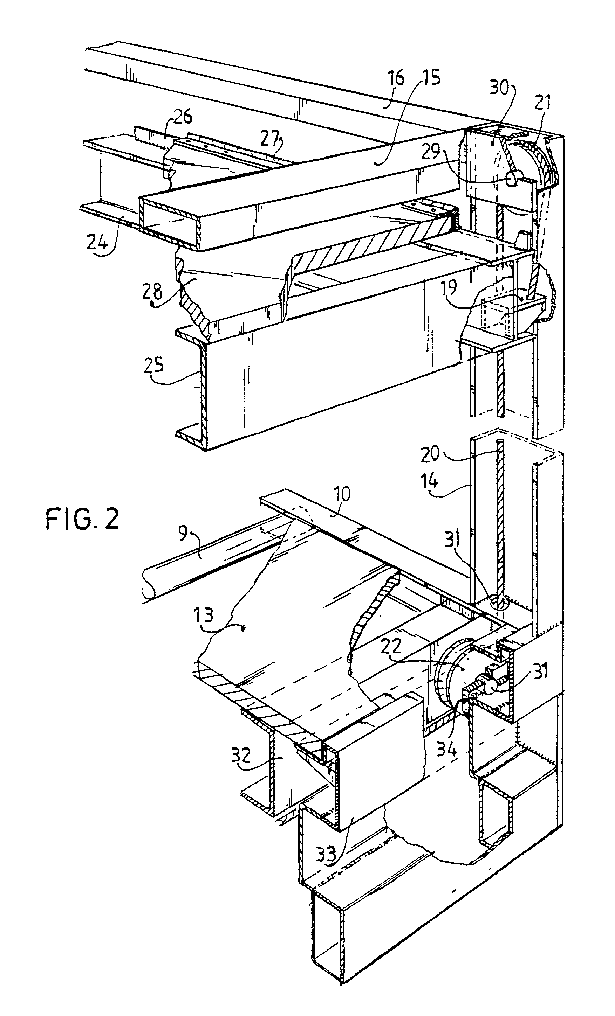

Shown in more detail in figure 2 is the construction of the movable loading floor 18, the guiding of this loading floor in posts 14 and the driving of this loading floor. The movable loading floor 18 consists essentially of two longitudinal beams 24 formed by I-profiles which are joined at their ends by cross beams 25. Welded onto each of the outer edges of longitudinal beam 24 is a strip 26. Connected to this strip 26 is a hinge 27 extending over the whole length, the other part of which is attached to plate 28 forming the loading floor proper. Plate 28 can be folded upward by means of hinge 27 so that the bottom loading floor can be loaded or unloaded from above, for example by means of a hoist crane. The ears 19 attached to the ends of the longitudinal beams of the movable loading floor are formed by a box-like construction welded to longitudinal beam 24. This box-like construction guides the movable loading floor. Attached to this box-like construction 19 is the cable 20 which is guided over a guide wheel 21. The latter is mounted to a shaft 29 which extends in the transverse direction between the closed side of the U-profile and a plate 30 welded thereto. Cable 20 is guided further downward through an opening 31 arranged in the relevant side beam 10 and round a guide wheel 22. This guide wheel 22 is mounted on a shaft 31 which extends between a first end cross beam 32 connecting side beams 10 and a plate 34 attached to a second end cross beam 33. The cable then extends to the pneumatic pulling device 23.

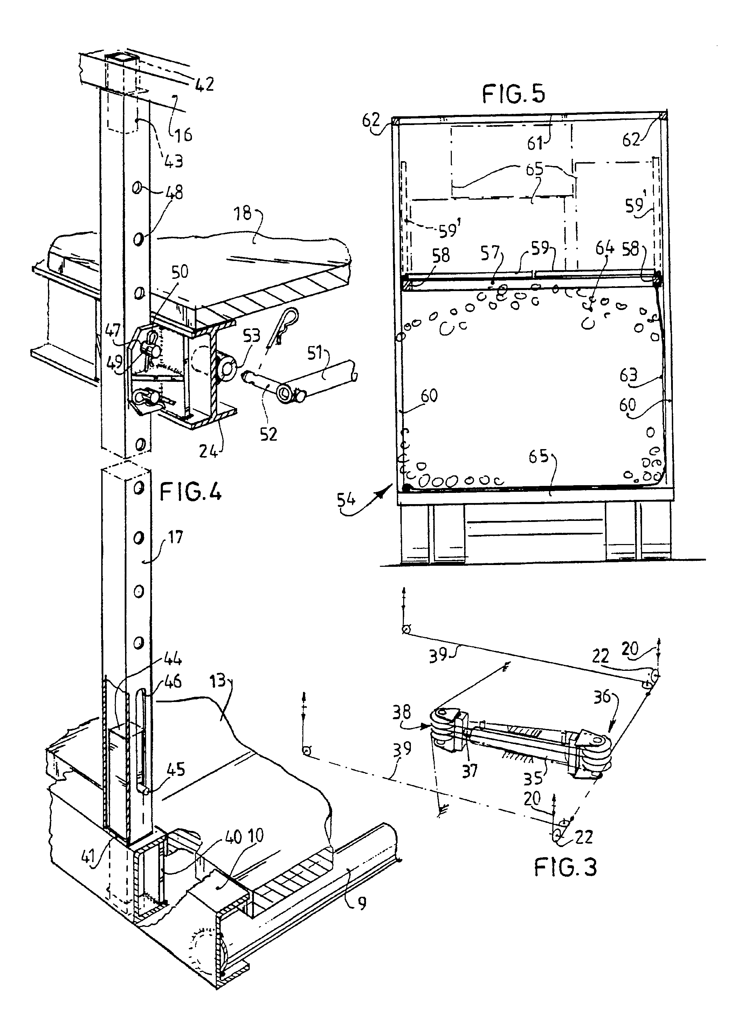

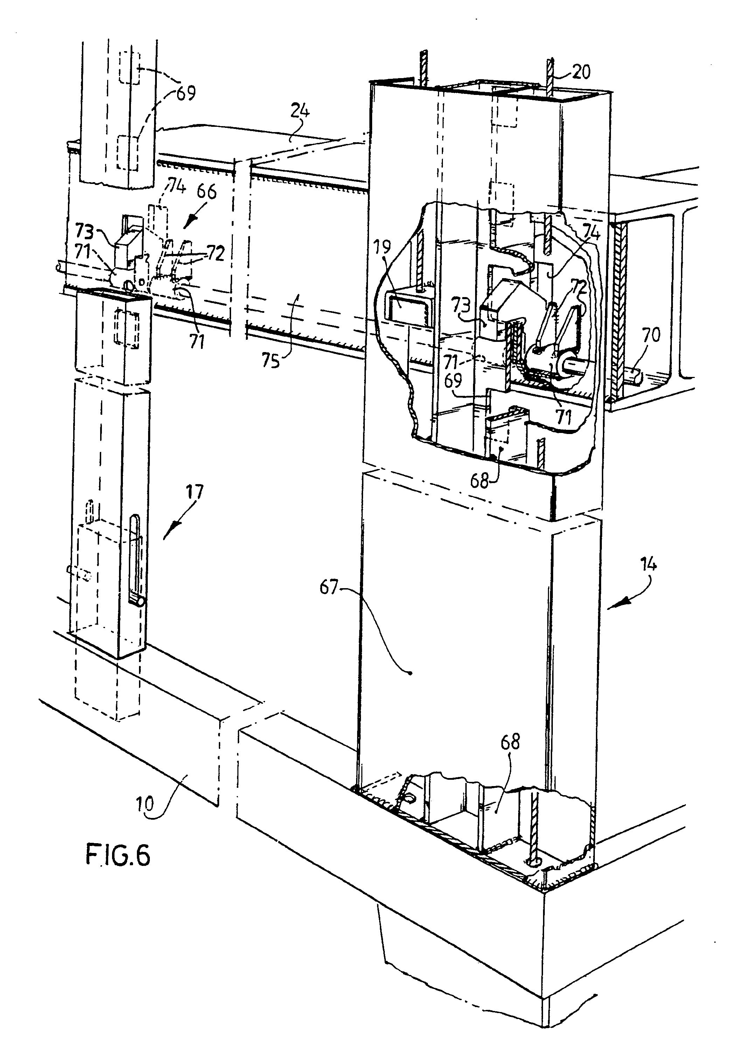

The movable loading floor is provided on the front side with a similar device for movement thereof. In the embodiment shown in figure 1 a pneumatic pulling device 23 is arranged for each of the pairs of cables 20, as is also shown schematically in figure 3. Such a pneumatic pulling device 23 comprises a cylinder 35 which is rigidly connected to the frame and which is provided on one end with a series of guide wheels 36. The pneumatic cylinder 35 is provided at its other end with a piston rod 37, on the end of which is fitted a second series of guide wheels 38. Each of the cables 20 is carried twice round the series of guide wheels 36 and twice round the series of guide wheels 38, and is then fastened firmly to the frame. Each of the cables 20 thus extends three times over the length of cylinder 35. When piston rod 37 is moved out of cylinder 35, and the distance between the series of guide wheels 36 and 38 is thus enlarged, this displacement is transmitted to the cables 20 increased three-fold, since the cables each extend three times over the distance between the two series of guide wheels 36, 38. As a result of this the displacement of the cylinder 35 will be transmitted magnified by a factor of three to the movable loading floor. It is of course possible to employ more or fewer guide wheels ; the transmission ratio will then change.

Also shown in figure 3 is an embodiment variant whereby only one pneumatic pulling device is necessary. The cables 39 fastened to the front corners of the movable loading floor are thereby guided to the rearmost part of the vehicle and there fastened to the cables 20 for the raising of the rear part of the loading floor. The movement of cables 20 is hereby transmitted to cables 39 so that by causing the pneumatic pulling device 23 to move, all the four cables are moved.

It is also possible to wind up the cables by means of a winch that is for instance electrically driven, while an attractive possibility is the driving of the movable loading floor using gear racks.

Figure 4 shows how the support bars 17 are attached for removal to the frame of the semi-trailer. Welded into each of the side beams 10 at the relevant locations are reinforcing plates 40 so that as a result the U-shaped profile is closed locally. At this location a square opening is also arranged in the top leg of the U-shaped profile.

Arranged directly above in the underside of the relevant longitudinal beam 16 is an opening 42. The support bar 17 formed by a hollow, square profile extends between both openings 41, 42. Support bar 17 is provided at its top with a square pin 43 which fits into opening 42 of longitudinal beam 16. Arranged in the interior of support bar 17 at the bottom is a movable block 44 which can move in vertical direction. This block 44 is provided with a pin 45 extending in lengthwise direction of the vehicle through a slot 46 arranged in a side wall of support bar 17. Using this pin 45 the block 44 can be lifted up so that support bar 17 can easily be placed in position by inserting it from underneath into opening 42 by means of block 44, by then placing the underside of the support bar above opening 41 and moving block 44 downward by means of pin 45. The support bars 17 can in this way be fitted and removed easily. Because the sides of the semi-trailer are covered by tarpaulin, which is of course easily removable, and support bars 17 are likewise removable, the whole side part of the semi-trailer is freely accessible.

Each of the longitudinal beams 24 of the movable loading floor 18 is provided at the location of support bar 17 with a pair of ears 47, in each of which are arranged two holes. By placing these holes in register with holes 48 arranged in support bar 17, pins 49 can be inserted through the relevant holes for additional fixing of the movable loading floor. These pins 49 can be locked by means of a locking pin 50.

Arranged for strengthening purposes between the two longitudinal beams 24 of movable loading floor 18 are cross pipes 51. In order to be able to remove cross pipes 51 — this is necessary when, in the upward folded position of the upper loading floor, the lower loading floor is loaded from above- the pipes 51 are provided at each end with a pin 52 which can be inserted into a short length of piping 53 arranged on the inside of longitudinal beam 24. The attachment can also be secured by means of a locking pin.

Drawn in figure 5 is a schematic cross sectional view of a second embodiment of the current invention, which is applied here in a normal goods vehicle 54. This vehicle 54 is naturally provided with a fixed loading floor 55 and with a movable loading floor 56. The latter rests on a frame formed out of cross beams 57 and longitudinal beams 58. The movable loading floor is formed essentially by two plates 59 each connected at their outer side for pivoting with the associated longitudinal beam 58 and extending to the middle of the cross beams. The plates 59 of movable loading floor 56 can each be folded upward to the position shown in figure 5 with dotted lines, so that the lower loading floor can easily be charged from above. Since in this embodiment the movable loading floor 56 is divided into two pieces, each of these pieces can be moved more easily into the topmost position.

The movable loading floor is of course suspended in the same manner as in the first embodiment, so that it can be moved in vertical direction. Movable loading floor 56 is thus guided only at its four corner points by posts 60 which are connected at their tops by cross beams 61 and longitudinal beams 62.

In accordance with a third embodiment of the invention a sheet 63 is fitted extending over the whole length of loading floors 55, 56 of goods vehicle 54. This sheeting is connected at its one end to the left-hand side of the lower loading floor and at its other end to the right-hand side of the movable loading floor. By fitting this flexible sheeting 63, it is possible to load the lower loading floor with loose bulk material, for example industrial apples. When these apples have to be unloaded, this can take place in very simple manner by removing the left side wall of goods vehicle 54, which will result in a portion of the apples on that side already being discharged, and by then moving the movable loading floor 56 upward, as a result of which the sheeting 63 is pulled tight and the remaining portion of the apples is unloaded.

It is of course possible to charge the part which remains unused in this application, that is, the part situated above the movable loading floor, with light material, which in this embodiment is indicated with boxes 65 shown with dotted and dashed lines.

The first described embodiment related to a semi-trailer, and the second embodiment related to a normal goode vehicle. The invention can of course also be applied to a trailer for a goods vehicle, or even to a railway wagon or other means of transport.

## Claims

1. Transport vehicle, comprising a fixed loading floor and at least a movable rectangular loading floor extending at least partially over the fixed loading floor, wherein the movable loading floor is movable parallel to itself in substantial vertical direction, wherein said movable loading floor is guided only at its corners, and wherein the side walls do not comprise any fixed structural member between the corners ; **characterized in**

— that the movable loading floor has an overall thickness, which is small relative to the overall thickness of the fixed loading floor ;

— that at least one of the side walls arranged on either side of the loading floors is removable in its entirety ; and

— that removable support means have been provided for the movable loading floor, which can be secured to said movable loading floor.

2. Transport vehicle according to claim 1, **characterized in** that the movable loading floor can be tilted on one of its sides.

3. Transport vehicle according to claim 1 or 2, **characterized in** that the movable loading floor is divided in lengthwise direction and that the parts of said movable loading floor are tiltable on their outermost longitudinal sides.

4. Transport vehicle according to claim 2 or 3, **characterized in** that a sheet extending substantially over the whole length of the movable loading floor is fastened between one of the sides of said movable loading floor and the fixed loading floor.

5. Transport vehicle according to any of the foregoing claims, **characterized in** that the chassis thereof takes a light construction form, and that the construction of the frame is adapted to the forces exerted by the guiding means.

6. Transport vehicle according to claim 5, **characterized in** that the chassis is provided with round pipes extending in transverse direction.

7. Transport vehicle according to any of the foregoing claims, **characterized in** that the movable loading floor can be moved by means of cables.

8. Transport vehicle according to any of the foregoing claims, **characterized in** that the loading floor is driven hydraulically.

9. Transport vehicle according to any of the foregoing claims, **characterized in** that the movable loading floor can be secured to the support means.

10. Transport vehicle according to claim 8 or 9, **characterized in** that the locking means arranged on a side of the movable loading floor can be actuated simultaneously.

## Patentansprüche

1. Transportfahrzeug mit einer festen Ladefläche und zumindestens einer beweglichen rechtwinkligen Ladefläche, die sich zumindestens teilweise über die feste Ladefläche erstreckt, wobei die bewegliche Ladefläche parallel zu sich selbst in einer im wesentlichen vertikalen Richtung beweglich ist, wobei die bewegliche Ladefläche lediglich an ihren Ecken geführt ist, und wobei die Seitenwände keine festen Bauteile zwischen den Ecken aufweisen, dadurch **gekennzeichnet,**

— daß die bewegliche Ladefläche eine Gesamtstärke aufweist, die verglichen mit der Gesamtstärke der festen Ladefläche klein ist ;

— daß zumindestens eine der Seitenwände, die auf den Seiten der Ladeflächen angeordnet sind, in ihrer Gesamtheit entfernbar ist ; und

— daß entfernbare Abstützeinrichtungen für die bewegliche Ladefläche vorgesehen sind, die an der beweglichen Ladefläche befestigbar sind.

2. Transportfahrzeug nach Anspruch 1, dadurch **gekennzeichnet,** daß die bewegliche Ladefläche an einer ihrer Seiten geklappt werden kann.

3. Transportfahrzeug nach Anspruch 1 oder 2, dadurch **gekennzeichnet,** daß die bewegliche Ladefläche in Längsrichtung unterteilt ist, und daß die Teile der beweglichen Ladefläche an ihren äußersten Längsseiten klappbar sind.

4. Transportfahrzeug nach Anspruch 2 oder 3, dadurch **gekennzeichnet,** daß eine Materialbahn, die sich im wesentlichen über die gesamte Länge der beweglichen Ladefläche erstreckt, zwischen einer der Seiten der beweglichen Ladefläche und der festen Ladefläche befestigt ist.

5. Transportfahrzeug nach einem der vorhergehenden Ansprüche, dadurch **gekennzeichnet**, daß das Chassis des Transportfahrzeuges die Form einer leichten Konstruktion aufweist und daß die Konstruktion des Rahmens an die Kräfte angepaßt ist, die von den Führungseinrichtungen ausgeübt werden.

6. Transportfahrzeug nach Anspruch 5, dadurch **gekennzeichnet**, daß das Chassis mit runden Rohren versehen ist, die sich in Querrichtung erstrecken.

7. Transportfahrzeug nach einem der vorhergehenden Ansprüche, dadurch **gekennzeichnet**, daß die bewegliche Ladefläche mit Hilfe von Seilen bewegbar ist.

8. Transportfahrzeug nach einem der vorhergehenden Ansprüche, dadurch **gekennzeichnnet**, daß die Ladefläche hydraulisch angetrieben wird.

9. Transportfahrzeug nach einem der vorhergehenden Ansprüche, dadurch **gekennzeichnet**, daß die bewegliche Ladefläche an den Stützeinrichtungen befestigbar ist.

10. Transportfahrzeug nach Anspruch 8 oder 9, dadurch **gekennzeichnet**, daß die Verriegelungseinrichtungen, die auf einer Seite der beweglichen Ladefläche angeordnet sind, gleichzeitig betätigbar sind.

**Revendications**

1. Véhicule de transport, comprenant un plancher fixe de chargement et au moins un plancher rectangulaire mobile de chargement disposé au moins en partie au-dessus du plancher fixe de chargement, le plancher mobile de chargement pouvant se déplacer parallèlement à lui-même en direction sensiblement verticale, le plancher mobile de chargement étant guidé uniquement à ses coins, et les parois latérales ne comportant aucun organe de structure fixe entre les coins, caractérisé en ce que :
— le plancher mobile de chargement a une épaisseur totale qui est relativement faible par rapport à l'épaisseur totale du plancher fixe de chargement,
— l'une au moins des parois latérales placée d'un côté ou de l'autre des planchers de chargement est amovible dans son ensemble, et
— des dispositifs amovibles de support du plancher mobile de chargement peuvent être fixés à ce plancher mobile.

2. Véhicule de transport selon la revendication 1, caractérisé en ce que le plancher mobile de chargement peut basculer sur l'un de ses côtés.

3. Véhicule de transport selon la revendication 1 ou 2, caractérisé en ce que le plancher mobile de chargement est divisé dans sa direction longitudinale, et les parties du plancher mobile peuvent pivoter sur leurs côtés longitudinaux externes.

4. Véhicule de transport selon la revendication 2 ou 3, caractérisé en ce qu'une feuille disposée pratiquement sur toute la longueur du plancher mobile de chargement est fixée entre l'un des côtés du plancher mobile de chargement et le plancher fixe de chargement.

5. Véhicule de transport selon l'une quelconque des revendications précédentes, caractérisé en ce que son châssis a une construction légère, et la construction du châssis est adaptée aux forces appliquées par le dispositif de guidage.

6. Véhicule de transport selon la revendication 5, caractérisé en ce que le châssis a des tubes de section circulaire placés en direction transversale.

7. Véhicule de transport selon l'une quelconque des revendications précédentes, caractérisé en ce que le plancher mobile de chargement peut être déplacé par des câbles.

8. Véhicule de transport selon l'une quelconque des revendications précédentes, caractérisé en ce que le plancher de chargement est déplacé hydrauliquement.

9. Véhicule de transport selon l'une quelconque des revendications précédentes, caractérisé en ce que le plancher mobile de chargement peut être fixé aux dispositifs de support.

10. Véhicule de transport selon la revendication 8 ou 9, caractérisé en ce que des dispositifs de blocage placés d'un côté du plancher mobile de chargement peuvent être manoeuvrés simultanément.

FIG.1

FIG. 2

FIG.5

FIG.4

FIG.3

FIG.6